# EUROPEAN PATENT SPECIFICATION

(11) **EP 4 430 360 B1**
(45) Date of publication and mention of the grant of the patent: **01.10.2025**
(21) Application number: 22814033.1
(22) Date of filing: 08.11.2022
(51) Int. Cl.: G01B 21/04, G01B 11/25, G01B 11/245

(54) **REFERENCE MASTER ASSEMBLY FOR CHECKING EQUIPMENT AND METHOD FOR SETTING UP THE REFERENCE MASTER ASSEMBLY**
REFERENZMASTERANORDNUNG ZUR ÜBERPRÜFUNG VON GERÄTEN UND VERFAHREN ZUM EINRICHTEN DER REFERENZMASTERANORDNUNG
ENSEMBLE MAÎTRE DE RÉFÉRENCE POUR ÉQUIPEMENT DE CONTRÔLE ET PROCÉDÉ DE MISE EN PLACE DE L'ENSEMBLE MAÎTRE DE RÉFÉRENCE

(30) Priority: 09.11.2021 IT 202100028412
(43) Date of publication of application: 18.09.2024
(73) Proprietor: Marposs Societa' Per Azioni, 40010 Bentivoglio (BO) (IT)
(72) Inventor: BARUCHELLO, Roberto, 40052 Baricella (BO) (IT)
(86) International application number: PCT/EP2022/081117
(87) International publication number: WO 2023/083804

(56) References cited:
- EP-A1- 3 851 789
- JP-A- 2014 018 932
- US-A1- 2018 374 239
- CHE C ET AL: "MODELING AND CALIBRATION OF A STRUCTURED-LIGHT OPTICAL CMM VIA SKEWED FRAME REPRESENTATION", TRANSACTIONS OF THE AMERICAN SOCIETY OF MECHANICAL ENGINEERS,SERIES B: JOURNAL OF ENGINEERING FOR INDUSTRY, ASME. NEW YORK, US, vol. 118, no. 4, 1 November 1996 (1996-11-01), pages 595 - 603, XP000635787, ISSN: 0022-0817
- ZHU FEI ET AL: "Extrinsic Calibration of Multiple Two-Dimensional Laser Rangefinders Based on a Trihedron", SENSORS, vol. 20, no. 7, 26 March 2020 (2020-03-26), CH, pages 1837, XP055927133, ISSN: 1424-8220, DOI: 10.3390/s20071837

## Description

### TECHNICAL FIELD

The present invention relates to a reference master assembly used for carrying out calibration operations of an equipment for checking a mechanical part which generates a three-dimensional numerical object starting from a physical object, more specifically a three-dimensional numerical object corresponding to the mechanical part to be checked, or to at least some portions of this mechanical part. The numerical object is then intended for per se known processing to carry out measurements relating to the mechanical part to be checked.

The invention also relates to a method for setting up the reference master assembly to calibrate the equipment for checking a mechanical part.

### BACKGROUND ART

Equipments are known comprising optoelectronic distance sensors, in particular 2D laser scanners, suitably arranged and oriented with respect to the mechanical part to be checked.

A calibration phase is needed for getting the proper arrangement and orientation of the sensors with reference to the specific mechanical part to be checked, and reference masters or reference master assemblies to be employed in the calibration phase are also known.

The known equipments are adapted to check mechanical parts having shapes and nominal dimensions different from one another, and such shapes may be complex. The corresponding reference master assemblies consequently need complex and/or costly and/or length set up operations.

European patent application published with No. EP3851789A1 shows an imaging system including optoelectronic devices like cameras and a number of reference master assemblies having complex shapes, to be selectively used for different checking operations of the imaging system.

### DISCLOSURE OF THE INVENTION

The object of the present invention is to provide a reference master assembly having a simple and not expensive structure and adapted to be simply and quickly set up for carrying out calibration operations on a checking equipment including at least an optoelectronic sensor.

It is also an object of the present invention to provide a simple and quick method for setting up such a reference master assembly.

The present invention provides a reference master assembly and a method for setting up such a reference master assembly as defined in the attached claims. The claims describe embodiments of the present invention and form an integral part of the present description.

### BRIEF DESCRIPTION OF THE DRAWINGS

The present invention is described with reference to the attached drawings, which illustrate non-limiting examples of embodiment, in which:
- figure 1 schematically shows components of an equipment with two optoelectronic sensors, for checking a mechanical part;
- figure 2 is a perspective view of a reference master assembly according to the present invention; and
- figure 3 shows two perspective views, one of them being partially cross-sectioned, of a component of the reference master assembly of figure 2.

### BEST MODE FOR CARRYING OUT THE INVENTION

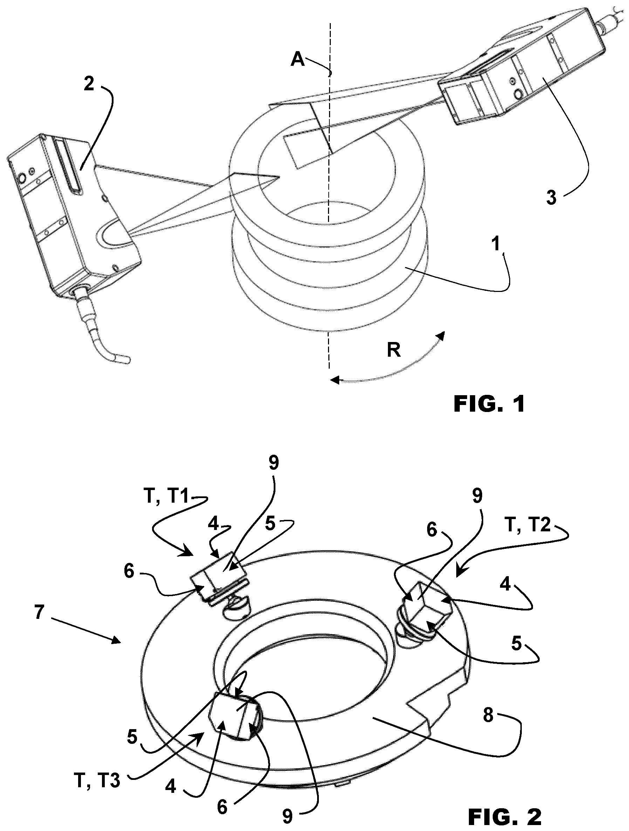

Figure 1 schematically shows components of an equipment with two laser scanners 2 and 3, for checking a mechanical part 1, for example a multidiameter workpiece. Each of the laser scanners 2, 3 emits a light plane: when an object, more specifically the mechanical part 1, intercepts this light plane, a light line is generated at the intersection between the mechanical part 1 and the light plane.

The physical aspect of the mechanical part 1 to be checked, i.e. its shape and size, 'shapes' the light line that is generated.

The light line that is shaped in such a way by the mechanical part 1 is observed from an angled position by means of a 2D or matrix camera, which is part of the checking device (laser scanner 2, 3).

The shaped light line as seen by the checking device is digitized and interpreted as a succession of a plurality of points, for example in the order of some thousands.

The position of each point of the shaped light line in the light plane emitted by the laser scanner 2, 3 is detected and identified by means of a pair of X, Z coordinates.

Each laser scanner 2, 3 is stationary and the mechanical part 1 to be checked is rotating so that the portions on which checks/measurements are to be carried out are visible by the laser scanner 2, 3, i.e. they are illuminated and intercepted by the light plane(s) during rotation.

The output of the laser scanner 2, 3 is a numerical matrix including the X, Z pairs of coordinate values of the points of N light lines detected - one at each acquisition instant of the laser scanner 2, 3 - during the rotation of the mechanical part 1, with respect to a fixed reference system.

This matrix can be interpreted as a plurality of two-dimensional clouds of points on many parallel planes placed side by side like the playing cards of a deck (the laser scanner 2, 3 does not know that it is a rotating object, because it does not have any data concerning the phase). The two-dimensional clouds of points are ordered one after the other, in the temporal order in which the corresponding light lines are detected.

The object obtained in this way appears to be a three-dimensional cloud of points but it is not; indeed it is a succession of two-dimensional clouds, that can be interpreted as a representation of the mechanical part 1 being both 'unrolled' along the scanning direction of the laser 2, 3 and distorted. As a general consideration in this regard, it should be noted that mechanical parts which, rotating under the laser light, have a trajectory that does not strike perpendicularly on the light plane of the laser light, appear distorted. In order to obtain the three-dimensional numerical object corresponding to the mechanical part 1 to be checked, on which the desired measurements can be carried out, it is therefore necessary to 're-roll' the succession of two-dimensional clouds of points, simultaneously correcting the distortions.

To do this, it is necessary to associate a phase to each X, Z pair of coordinates identifying the points in the laser system, and then transform the two-dimensional clouds of points by means of (per se known) coordinate transformation algorithms into a proper three-dimensional cloud of points, in a machine reference system.

In order to know the phase of each X, Z pair of coordinates that identifies one of the points, it is necessary, among other things, to know the exact position of the axis of rotation A of the mechanical part 1 with respect to the reference system of the laser. The origin of the reference system of the laser scanners 2, 3 is generally not defined in any way by means of mechanical references, therefore it is not possible to obtain the desired positioning during the assembly phase.

A calibration phase and an appropriate reference master assembly are therefore required. Methods are known which make it possible to know the position of the origin of the reference system of a laser scanner with respect to a reference system associated with a reference master assembly, the latter including a portion defining reference surfaces that is a trihedron shaped portion. More specifically, the trihedron shaped portion features three mutually perpendicular plane faces that are crossed by the light plane emitted by the laser scanner.

In order to identify the exact position of the axis A of rotation of the reference master assembly with respect to the reference system of the laser scanner, a reference master assembly 7 according to the present invention comprises at least two trihedrons T in known mutual positions, for example fixed to a same support body or frame 8, and intended to rotate together with the support body or frame 8 and, during rotation, to be crossed one after the other by the light plane emitted by the laser scanner 2, 3.

According to a possible embodiment of the present invention (shown in figure 2), the reference master assembly comprises three trihedrons T1, T2, T3 - more specifically three elements 9 each of which includes three plane reference surfaces 4, 5, 6 which are nominally and substantially perpendicular to one another defining one of the trihedrons T1, T2, T3 - arranged in mutually known positions. It is pointed out that any of the trihedrons T1, T2, T3 can be defined by plane reference surfaces 4, 5, 6 which are not exactly perpendicular to one another, since this deviation with respect to the nominal shape can be easily compensated by the measuring software employed. The number of trihedrons T, suitably arranged, can be advantageously increased to four or more.

The mechanical part 1 to be checked is arranged in a checking position on a rotating table or rotating support, the latter being schematically represented in figure 1 with the reference R, and each laser scanner (one or more) 2, 3 is positioned and suitably inclined in such a way that the emitted light plane crosses, during the rotation, all the regions of interest of the mechanical part 1, that is all the portions of the mechanical part 1 that must be measured. Predicting ex-ante the position and arrangement of the laser scanner(s) 2, 3 would be very complex, and adjustments on site would most of the times be inevitably needed when the mechanical part 1 to be checked is placed in the checking position on the rotating support R. The position in space, or orientation, of the reference surfaces 4, 5 and 6, that is of the trihedrons T1, T2 and T3 of the reference master assembly 7, must adapt to the final position and orientation of the laser scanner(s) 2, 3 to ensure that, in at least one position during the rotation of the reference master assembly 7 the light plane(s) emitted by the laser scanner(s) 2, 3 simultaneously illuminate and cross all the three faces or mutually perpendicular reference surfaces 4, 5 and 6 that share a calibrated vertex, so generating a shaped or broken line consisting of three straight segments.

The definition of the position and orientation of the laser scanner(s) 2, 3 takes place at an advanced stage of the production of the checking equipment. Designing and manufacturing the reference master assembly 7 at this point, would cause long waits and severe delays.

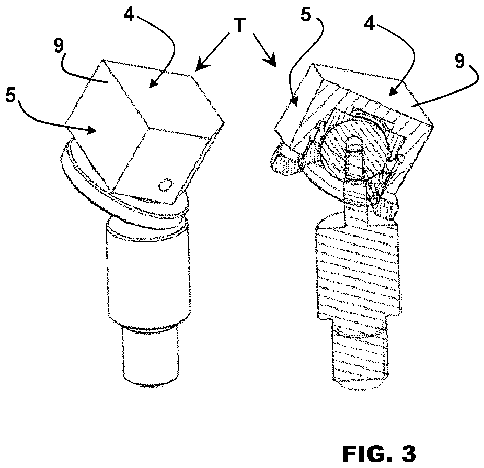

A reference master assembly 7 according to the invention - such as the one shown in figure 2 - includes a support body or frame 8 to which trihedrons (for example three trihedrons) T1, T2 and T3 are connected in a pivoting way and their orientation can be adjusted in space as shown in the view and section of the figure 3. The orientation of each trihedron T is fixed (for example by gluing the corresponding element 9) once its position (which depends on the arrangement of the laser scanner(s) 2, 3) has been defined. Afterwards, the reference master assembly 7 is taken to the metrology room for the certification of the configuration that is so defined.

In such a way the reference master assembly 7 can be manufactured in advance and the post assembly operations can be limited just to fine-tuning movements of the pivoting coupling, fixation and subsequent certification. In summary: it is not required that the orientation of the trihedrons T, that is of the reference surfaces 4, 5 and 6, be known at the time of manufacturing of the reference master assembly 7. Such orientation can be defined and fixed when the configuration of the checking equipment, more specifically when the arrangement, in particular the inclination or orientation, of the laser scanner(s) 2, 3, is adapted, in operation, to the specific mechanical part 1 to be checked. As a consequence, a method according to the invention for setting up the reference master assembly 7 comprises the following steps: placing the mechanical part 1 to be checked in a checking position, typically on the rotating support R; orient each optoelectronic sensor present in the equipment (in the example of figure 1 each of the two laser scanners 2, 3) so that the relative light plane crosses the portions, or regions of interest of the mechanical part 1 to be checked; placing the reference master assembly 7 in the checking position; adjusting the orientation of the trihedrons T1, T2, T3 so that the light plane crosses the relative reference surfaces 4, 5 and 6, that is the three faces of the trihedrons T1, T2, T3; and fixing the orientation of the trihedrons T1, T2, T3. Afterwards, as already mentioned, the reference master assembly 7 is taken to the metrology room for the certification of the configuration that is so defined.

The number of pivoting trihedrons T of the reference master assembly 7 can vary according to the number of laser scanners 2, 3 that are employed, and is at least two, preferably three, if there is only one laser scanner 2. As a rule, an additional trihedron T is to be provided for each laser scanner 3 that is added to the first one. In the case of the equipment schematized in figure 1, the reference master assembly 7 preferably comprises four trihedrons T.

## Claims

1. Reference master assembly (7) for carrying out calibration operations of an equipment for checking a mechanical part (1) which generates a three-dimensional numerical object corresponding to said mechanical part (1) and which comprises at least one optoelectronic sensor (2, 3) adapted to project a light plane on the mechanical part (1) to be checked, the reference master assembly (7) including a support body (8) and at least two trihedrons (T; T1, T2, T3) which define reference surfaces (4, 5, 6) and are connected to the support body (8) in mutually known positions, the reference surfaces (4, 5, 6) being adapted to be crossed by said light plane,
the reference master assembly (7) is **characterized by** the fact that each of said at least two trihedrons (T; T1, T2, T3) is connected to the support body (8) by means of a pivoting coupling adapted to allow the orientation of the reference surfaces (4, 5, 6) to be adjusted in space.

2. Reference master assembly (7) according to claim 1, comprising at least three trihedrons (T; T1, T2, T3) connected to the support body (8) in mutually known positions.

3. Reference master assembly (7) according to claim 2, comprising at least four trihedrons (T; T1, T2, T3) connected to the support body (8) in mutually known positions.

4. Reference master assembly (7) according to any one of the preceding claims, that is suitable to be used to calibrate a checking equipment in which said at least one optoelectronic sensor (2, 3) is a laser scanner.

5. Reference master assembly (7) according to any one of the preceding claims, that is suitable to be used to calibrate a checking equipment with two laser scanners (2, 3), comprising at least four trihedrons (T; T1, T2, T3) connected to the support body (8) in mutually known positions.

6. Method for setting up a reference master assembly (7) according to any one of the preceding claims, to calibrate an equipment for checking a mechanical part (1) which generates a three-dimensional numerical object corresponding to at least some portions of the mechanical part (1) and which comprises at least one optoelectronic sensor (2, 3) adapted to project a light plane onto said portions of the mechanical part (1), the method comprising the steps of:
• placing the mechanical part (1) to be checked in a checking position,
• orienting said at least one optoelectronic sensor (2, 3) so that the light plane crosses said portions of the mechanical part (1) to be checked,
• placing the reference master assembly (7) in the checking position,
• adjusting the orientation of the trihedrons (T; T1, T2, T3) so that the light plane crosses the reference surfaces (4, 5, 6), and
• fixing the orientation of the trihedrons (T; T1, T2, T3).

7. Method according to claim 6, further including, after the fixing step, the step of taking the reference master assembly (7) to the metrology room for the certification of a configuration so defined.

8. Method according to claim 6 or claim 7, wherein the mechanical part (1) to be checked and the reference master assembly (7) are arranged in a checking position on a rotating support (R).

9. Method according to claim 8, wherein the calibration of the checking equipment includes the identification of the rotation axis (A) of the mechanical part (1) to be checked with respect to a reference system of the optoelectronic sensor (2, 3).

## Patentansprüche

1. Referenzmasteranordnung (7) zur Durchführung von Kalibriervorgängen eines Geräts zur Prüfung eines mechanischen Teils (1), das ein dem mechanischen Teil (1) entsprechendes dreidimensionales numerisches Objekt erzeugt und mindestens einen optoelektronischen Sensor (2, 3) umfasst, der dazu angepasst ist, eine Lichtebene auf das zu prüfende mechanische Teil (1) zu projizieren, wobei die Referenzmasteranordnung (7) einen Stützkörper (8) und mindestens zwei Trieder (T; T1, T2, T3), die Referenzflächen (4, 5, 6) definieren und in einander bekannten Positionen mit dem Trägerkörper (8) verbunden sind, umfasst, wobei die Referenzflächen (4, 5, 6) dazu angepasst sind, von der Lichtebene gekreuzt zu werden,
wobei sich die Referenzmasteranordnung (7) dadurch auszeichnet, dass jedes der mindestens zwei Trieder (T; T1, T2, T3) mit dem Tragkörper (8) mittels einer Schwenkkupplung verbunden ist, die dazu angepasst ist, eine Orientierung der Referenzflächen (4, 5, 6) im Raum zu ermöglichen.

2. Referenzmasteranordnung (7) nach Anspruch 1, umfassend mindestens drei Trieder (T; T1, T2, T3), die in einander bekannten Positionen mit dem Tragkörper (8) verbunden sind.

3. Referenzmasteranordnung (7) nach Anspruch 2, umfassend mindestens vier Trieder (T; T1, T2, T3), die in einander bekannten Positionen mit dem Tragkörper (8) verbunden sind.

4. Referenzmasteranordnung (7) nach einem der vorhergehenden Ansprüche, die dazu geeignet ist, verwendet zu werden, um ein Prüfgerät zu kalibrieren, bei dem der mindestens eine optoelektronische Sensor (2, 3) ein Laserscanner ist.

5. Referenzmasteranordnung (7) nach einem der vorhergehenden Ansprüche, die dazu geeignet ist, zum Kalibrieren eines Prüfgeräts mit zwei Laserscannern (2, 3) verwendet zu werden, die mindestens vier Trieder (T; T1, T2, T3) umfasst, die mit dem Trägerkörper (8) in einander bekannten Positionen verbunden sind.

6. Verfahren zum Einrichten einer Referenzmasteranordnung (7) nach einem der vorhergehenden Ansprüche, um ein Gerät zum Prüfen eines mechanischen Teils (1) zu kalibrieren, das ein dreidimensionales numerisches Objekt erzeugt, das mindestens einigen Abschnitten des mechanischen Teils (1) entspricht und das mindestens einen optoelektronischen Sensor (2, 3) umfasst, der dazu angepasst ist, eine Lichtebene auf die Abschnitte des mechanischen Teils (1) zu projizieren, wobei das Verfahren die folgenden Schritte umfasst:
• Platzieren des zu prüfenden mechanischen Teils (1) in einer Prüfposition,
• Ausrichten des mindestens einen optoelektronischen Sensors (2, 3), sodass die Lichtebene die Abschnitte des zu prüfenden mechanischen Teils (1) kreuzt,
• Platzieren der Referenzmasteranordnung (7) in der Prüfposition,
• Einstellen der Ausrichtung der Trieder (T; T1, T2, T3), sodass die Lichtebene die Referenzflächen (4, 5, 6) kreuzt, und
• Fixieren der Ausrichtung der Trieder (T; T1, T2, T3).

7. Verfahren nach Anspruch 6, das ferner nach dem Fixierungsschritt den Schritt des Verbringens der Referenzmasteranordnung (7) in den Messraum für die Zertifizierung einer so definierten Konfiguration beinhaltet.

8. Verfahren nach Anspruch 6 oder Anspruch 7, wobei das zu prüfende mechanische Teil (1) und die Referenzmasteranordnung (7) in einer Prüfposition auf einem rotierenden Träger (R) angeordnet sind.

9. Verfahren nach Anspruch 8, wobei die Kalibrierung des Prüfgeräts die Identifikation der Drehachse (A) des zu prüfenden mechanischen Teils (1) in Bezug auf ein Referenzsystem des optoelektronischen Sensors (2, 3) beinhaltet.

## Revendications

1. Ensemble maître (7) de référence destiné à réaliser des opérations d'étalonnage d'un équipement servant à contrôler une pièce mécanique (1) qui génère un objet numérique tridimensionnel correspondant à ladite pièce mécanique (1) et qui comporte au moins un capteur optoélectronique (2, 3) prévu pour projeter un plan lumineux sur la pièce mécanique (1) à contrôler, l'ensemble maître (7) de référence comprenant un corps (8) d'appui et au moins deux trièdres (T ; T1, T2, T3) qui définissent des surfaces (4, 5, 6) de référence et sont liés au corps (8) d'appui dans des positions mutuellement connues, les surfaces (4, 5, 6) de référence étant prévues pour être croisées par ledit plan lumineux,
l'ensemble maître (7) de référence étant **caractérisé par le fait que** chacun desdits au moins deux trièdres (T ; T1, T2, T3) est lié au corps (8) d'appui au moyen d'un couplage pivotant prévu pour permettre à l'orientation des surfaces (4, 5, 6) de référence d'être réglée dans l'espace.

2. Ensemble maître (7) de référence selon la revendication 1, comportant au moins trois trièdres (T ; T1, T2, T3) liés au corps (8) d'appui dans des positions mutuellement connues.

3. Ensemble maître (7) de référence selon la revendication 2, comportant au moins quatre trièdres (T ; T1, T2, T3) liés au corps (8) d'appui dans des positions mutuellement connues.

4. Ensemble maître (7) de référence selon l'une quelconque des revendications précédentes, qui est apte à être utilisé pour étalonner un équipement de contrôle dans lequel ledit ou lesdits capteurs optoélectroniques (2, 3) sont un scanner à laser.

5. Ensemble maître (7) de référence selon l'une quelconque des revendications précédentes, qui est apte à être utilisé pour étalonner un équipement de contrôle à l'aide de deux scanners (2, 3) à laser, comportant au moins quatre trièdres (T ; T1, T2, T3) liés au corps (8) d'appui dans des positions mutuellement connues.

6. Procédé de configuration d'un ensemble maître (7) de référence selon l'une quelconque des revendications précédentes, pour étalonner un équipement servant à contrôler une pièce mécanique (1) qui génère un objet numérique tridimensionnel correspondant à au moins certaines parties de la pièce mécanique (1) et qui comporte au moins un capteur optoélectronique (2, 3) prévu pour projeter un plan lumineux sur lesdites parties de la pièce mécanique (1), le procédé comportant les étapes consistant à :
• placer la pièce mécanique (1) à contrôler dans une position de contrôle,
• orienter ledit ou lesdits capteurs optoélectroniques (2, 3) de telle façon que le plan lumineux croise lesdites parties de la pièce mécanique (1) à contrôler,
• placer l'ensemble maître (7) de référence dans la position de contrôle,
• régler l'orientation des trièdres (T ; T1, T2, T3) de telle façon que le plan lumineux croise les surfaces (4, 5, 6) de référence, et
• fixer l'orientation des trièdres (T ; T1, T2, T3).

7. Procédé selon la revendication 6, comprenant en outre, après l'étape de fixation, l'étape consistant à emmener l'ensemble maître (7) de référence à la salle de métrologie pour la certification d'une configuration ainsi définie.

8. Procédé selon la revendication 6 ou la revendication 7, la pièce mécanique (1) à contrôler et l'ensemble maître (7) de référence étant disposés dans une position de contrôle sur un support pivotant (R).

9. Procédé selon la revendication 8, l'étalonnage de l'équipement de contrôle comprenant l'identification de l'axe (A) de rotation de la pièce mécanique (1) à contrôler par rapport à un système de référence du capteur optoélectronique (2, 3).
